# EUROPEAN PATENT APPLICATION

(11) **EP 4 667 295 A1**
(43) Date of publication of application: **24.12.2025**
(21) Application number: 25182253.2
(22) Date of filing: 12.06.2025
(51) Int. Cl.: B60R 19/18, B60R 19/34, B60R 19/04

(54) **VEHICLE FRONT STRUCTURE**

(30) Priority: 19.06.2024 JP 2024098679
(71) Applicant: MAZDA MOTOR CORPORATION, Hiroshima 730-8670 (JP)
(72) Inventor: Kawano, Akihiro, Hiroshima, 730-8670 (JP); Shimono, Tomohiro, Hiroshima, 730-8670 (JP)
(74) Representative: Lorenz Seidler Gossel Part. mbB

(57) **Abstract**

An object of the invention is to provide a vehicle front structure capable of suppressing a rupture of a joint portion between a crash can and a coupling member when a collision object having a narrower width than a distance in a vehicle width direction between left and right crash cans collides between the left and right crash cans in a vehicle front portion. An inner bumper reinforcement (102) disposed between crash cans (9) and extending along a vehicle width direction (Y) is provided. In the crash cans (9) and an outer bumper reinforcement (101), flange portions (912) of the crash cans (9) are joined to a rear surface of the outer bumper reinforcement (101), and both ends in the vehicle width direction (Y) of the inner bumper reinforcement (102) are joined to a position located on a vehicle rear side (XR) of a joint portion between each of the crash cans (9) and the outer bumper reinforcement (101) and near a front end of each of the crash cans (9).

## Description

The present invention relates to a vehicle front structure including a pair of left and right crash cans extending in a vehicle front-rear direction with a predetermined distance therebetween in a vehicle width direction of a vehicle, for example, and a bumper reinforcement coupling front ends of the left and right crash cans in the vehicle width direction.

For a vehicle such as an automobile, a vehicle front structure has been known to transmit a collision load from a vehicle front side, which is applied to a vehicle front portion, to a vehicle rear side when a collision object collides with the vehicle front portion.

For example, JP2017-039371A1 discloses a vehicle front structure including: left and right crash cans provided at front ends of left and right front side frames; and a bumper reinforcement as a coupling member that couples front ends of the crash cans in the vehicle width direction.

Meanwhile, in the vehicle front structure as disclosed in JP2017-039371A, for example, in the case where the collision object, such as a utility pole, that is narrower than a distance in the vehicle width direction between the left and right crash cans collides with a portion between the left and right crash cans, the narrow collision object, which has collided with the vehicle front portion, presses the portion between the crash cans in the bumper reinforcement toward the vehicle rear side.

As a result, the bumper reinforcement is bent and deformed toward the vehicle rear side in a manner to be bent at a collision position with the narrow collision object.

At this time, a tensile load in a vehicle rear direction and toward an inner side in the vehicle width direction is generated at the joint portion between a front end on the inner side in the vehicle width direction of the crash can and the bumper reinforcement, and is increased with progress in the collision with the narrow collision object.

As a result, there is a possibility that the joint portion between the crash can and the bumper reinforcement as the coupling member is ruptured with the progress in the collision with the narrow collision object, which promotes detachment of the bumper reinforcement from the crash can at an early stage or reduced transmission efficiency for transmitting the collision load to the vehicle rear side.

Thus, there is room for improvement.

**In** view of the above-described problem, an object of the invention is to provide a vehicle front structure capable of suppressing a rupture of a joint portion between a crash can and a coupling member when a narrower collision object than the distance in the vehicle width direction between left and right crash cans collides with a portion between the left and right crash cans in a vehicle front portion.

The invention is a vehicle front structure including: a pair of left and right crash cans extending in a vehicle front-rear direction with a predetermined distance being interposed therebetween in a vehicle width direction of a vehicle; and a coupling member coupling front ends of the left and right crash cans in the vehicle width direction, and includes a width direction member disposed between the crash cans and extending along the vehicle width direction, in which in regard to the crash cans and the coupling member, a front end on an inner side in the vehicle width direction of each of the crash cans is joined to a rear surface of the coupling member, and each of both ends in the vehicle width direction of the width direction member is joined to a position located on a vehicle rear side of a joint portion between each of the crash cans and the coupling member and near the front end of each of the crash cans.

The coupling member may be a member that constitutes a bumper reinforcement coupling the left and right crash cans, or may be the bumper reinforcement.

The width direction member may be a member constituting the bumper reinforcement, or may be a member formed as a separate body from the coupling member.

According to the invention, it is possible to suppress a rupture of a joint portion between each of the crash cans and the coupling member when a narrower collision object than a distance in the vehicle width direction between the left and right crash cans collides between the left and right crash cans in the vehicle front portion.

**In** detail, in the vehicle front structure, the left and right crash cans can be coupled to the width direction member by joining the width direction member at the position located on the vehicle rear side of the joint portion between each of the left and right crash cans and the coupling member and near the front end of each of the crash cans.

Thus, compared to a case where the crash cans are coupled only by the coupling member, the vehicle front structure can improve coupling strength of the left and right crash cans against a collision load from the vehicle front side.

Furthermore, in the vehicle front structure, when the narrow collision object collides with the vehicle front portion, the coupling member and the width direction member coupling the left and right crash cans can integrally be deformed. Thus, compared to the case where the left and right crash cans are coupled only by the coupling member, it is possible to suppress a tensile load generated in the joint portion between the front end on the inner side in the vehicle width direction of each of the crash cans and the coupling member.

Thus, it is possible to suppress the rupture of the joint portion between each of the crash cans and the coupling member when the narrower collision object than the distance in the vehicle width direction between the left and right crash cans collides between the left and right crash cans in the vehicle front portion.

For this reason, the vehicle front structure can prevent detachment of the coupling member from the crash cans at an early stage or a reduction in load transmission efficiency for transmitting the collision load to the vehicle rear side, for example.

As an aspect of the invention, in a state of abutting the rear surface of the coupling member, each of the crash cans may be fixed thereto, and, in a state of abutting the inner side in the vehicle width direction of each of the crash cans, the width direction member may be fixed thereto.

The above-described abutment state refers to a state of direct abutment of an end surface or a state of indirect abutment via a flange formed in an end portion.

According to this configuration, since each of the crash cans and the coupling member can be fixed to each other along the vehicle front-rear direction, it is possible to improve coupling strength of the crash cans against a tensile load in the vehicle front-rear direction.

Furthermore, in the vehicle front structure, since each of the crash cans and the width direction member can be fixed to each other along the vehicle width direction, it is possible to improve the coupling strength of the crash cans against the tensile load in the vehicle width direction.

Accordingly, the vehicle front structure can further improve the coupling strength of the left and right crash cans against the collision load from the vehicle front side, and thus can suppress the rupture of the joint portion between each of the crash cans and the coupling member caused by the collision of the narrow collision object.

As an aspect of the invention, each of the crash cans may be provided with a fixed portion that is formed in a closed cross-sectional shape having a side wall portion opposing in the vehicle width direction and extends inward in the vehicle width direction from a front end of the side wall portion on the inner side in the vehicle width direction, the fixed portion may be fixed to the coupling member by fastening, and the width direction member may be fixed to the side wall portion on the inner side in the vehicle width direction of each of the crash cans by welding.

According to this configuration, the front end on the inner side in the vehicle width direction of each of the crash cans and the coupling member can firmly be fixed to each other by fastening, and each of the crash cans and the width direction member can firmly be fixed to each other by welding.

In this way, the vehicle front structure can further improve the coupling strength of the left and right crash cans against the collision load from the vehicle front side.

An aspect of the invention includes a bumper reinforcement that couples the crash cans in the vehicle width direction. The coupling member may be formed by an outer bumper reinforcement of the bumper reinforcement that couples the front ends of the crash cans in the vehicle width direction, and the width direction member may be joined to a rear surface of the outer bumper reinforcement, may have a closed cross section extending in the vehicle width direction with the outer bumper reinforcement, and may be formed by an inner bumper reinforcement of the bumper reinforcement.

According to this configuration, it is possible to improve the coupling strength of the left and right crash cans without providing a separate member from the bumper reinforcement.

Therefore, the vehicle front structure can suppress the rupture of the joint portion between each of the crash cans and the coupling member with a simple structure.

As an aspect of the invention, each of the crash cans may be formed in a closed cross-sectional shape that has a side wall portion opposing in the vehicle width direction, and the lateral wall portion may be provided with a bead at a position behind the width direction member in the vehicle, the bead extending in a vehicle up-down direction and promoting deformation of the crash cans by a collision load from a vehicle front side.

According to this configuration, when the narrower collision object than the distance in the vehicle width direction between the left and right crash cans collides between the left and right crash cans in the vehicle front portion, each of the crash cans can be deformed rearward in the vehicle in conjunction with the deformation of the coupling member and the width direction member.

Therefore, when the narrow collision object collides between the crash cans in the vehicle front portion, the vehicle front structure can transmit the collision load from the vehicle front side to the vehicle rear side while absorbing it by the deformation of the crash cans.

As an aspect of the invention, the left and right crash cans may be disposed such that the distance in the vehicle width direction is increased to the front in the vehicle from the vehicle rear side, and the coupling member may extend outward in the vehicle width direction in comparison with outer end portions in the vehicle width direction of the crash cans.

According to this configuration, for example, the narrow collision object, which moves from the vehicle front side toward the vehicle rear side through the outer side in the vehicle width direction of the crash cans, can be brought into contact with the coupling member.

At this time, in the vehicle front structure, the width direction member can suppress the deformation of each of the crash cans in the manner to be tilted outward in the vehicle width direction and toward the vehicle rear side in the plan view.

**In** this way, the vehicle front structure can suppress the collision object from the vehicle front side from moving to the vehicle rear side through the outer side in the vehicle width direction of the crash cans.

Therefore, the vehicle front structure can cope with not only the collision of the narrow collision object between the crash cans but also a collision of the narrow collision object to the outer side in the vehicle width direction.

The invention can provide the vehicle front structure capable of suppressing the rupture of the joint portion between each of the crash cans and the coupling member when the narrower collision object than the distance in the vehicle width direction between the left and right crash cans collides between the left and right crash cans in the vehicle front portion.

### Brief Description of Drawings:

[FIG. 1] FIG. 1 is a plan view illustrating external appearance of a vehicle front structure in a plan view.
[FIG. 2] FIG. 2 is an end view that is taken along a section line A-A in FIG. 1.
[FIG. 3] FIG. 3 is a schematic cross-sectional view that is taken along an arrow B-B in FIG. 1.
[FIG. 4] FIG. 4 is a schematic cross-sectional view that is taken along an arrow C-C in FIG. 3.
[FIG. 5] FIG. 5 is a schematic cross-sectional perspective view illustrating a main section of the vehicle front structure.
[FIG. 6] FIG. 6 is a plan view of a state of a vehicle immediately before a collision with a pole.
[FIG. 7] FIG. 7 is a plan view illustrating the state of the vehicle immediately after the collision in the plan view.
[FIG. 8] FIG. 8 is a plan view illustrating the state of the vehicle whose collision has progressed in the plan view.

An embodiment of the invention will be described below with reference to the drawings.

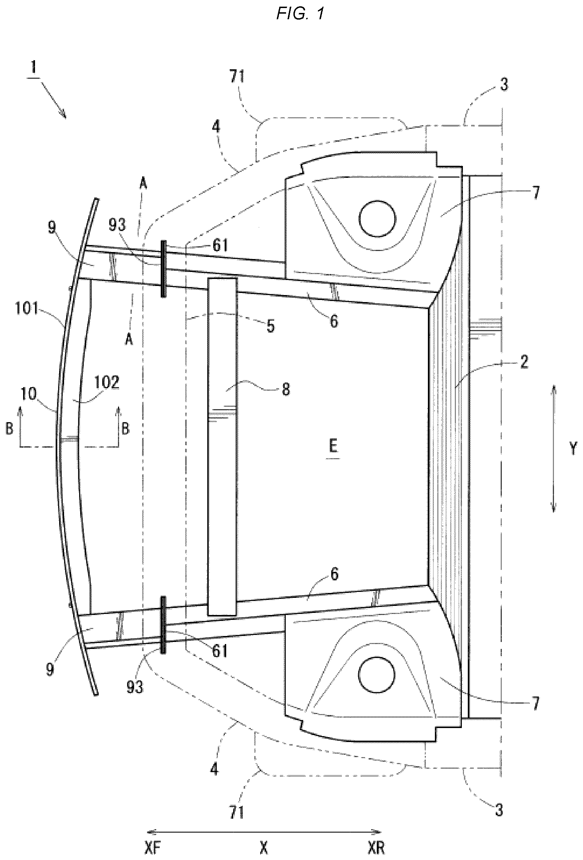

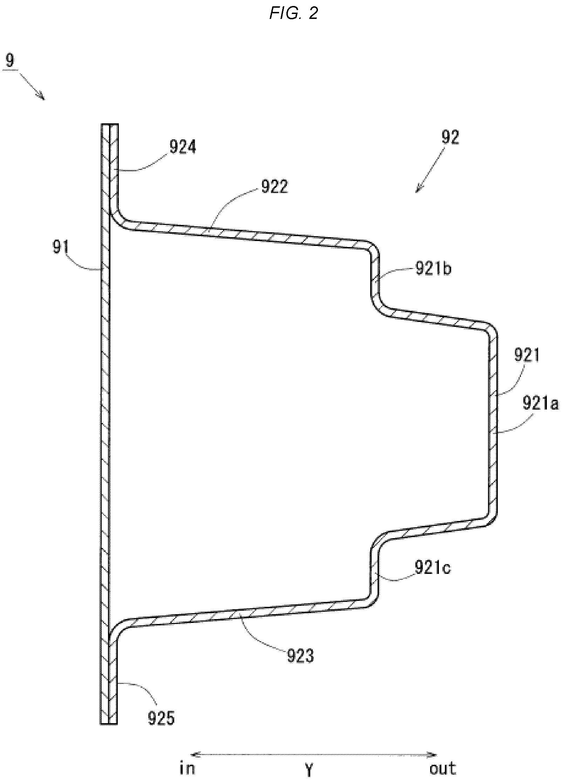

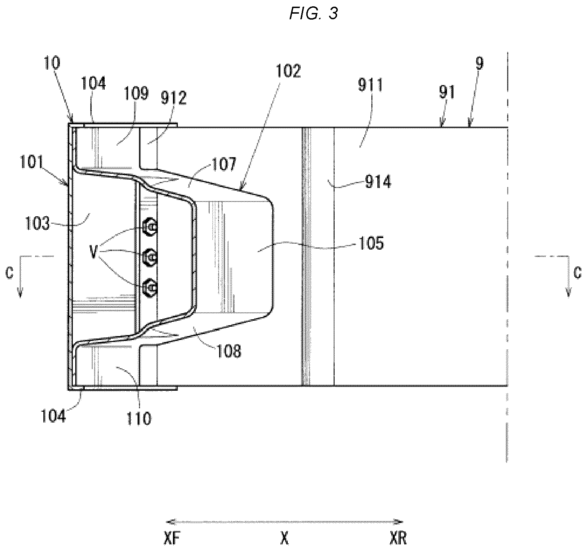

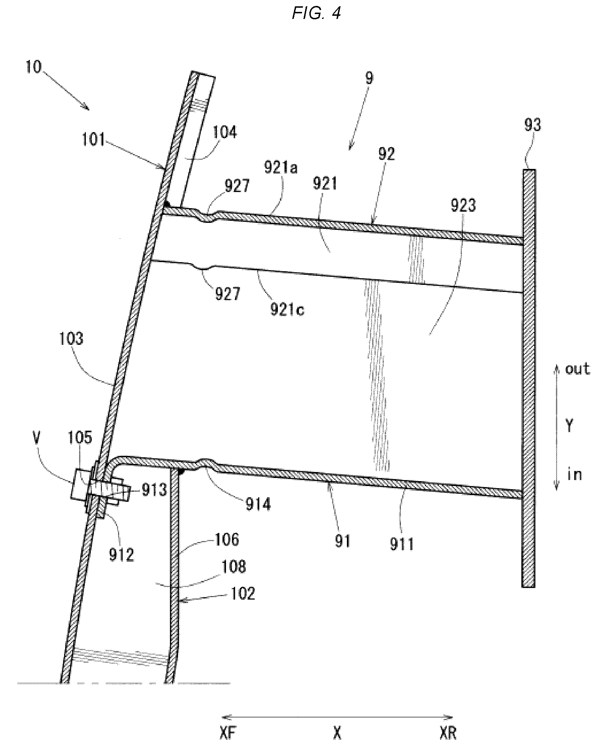

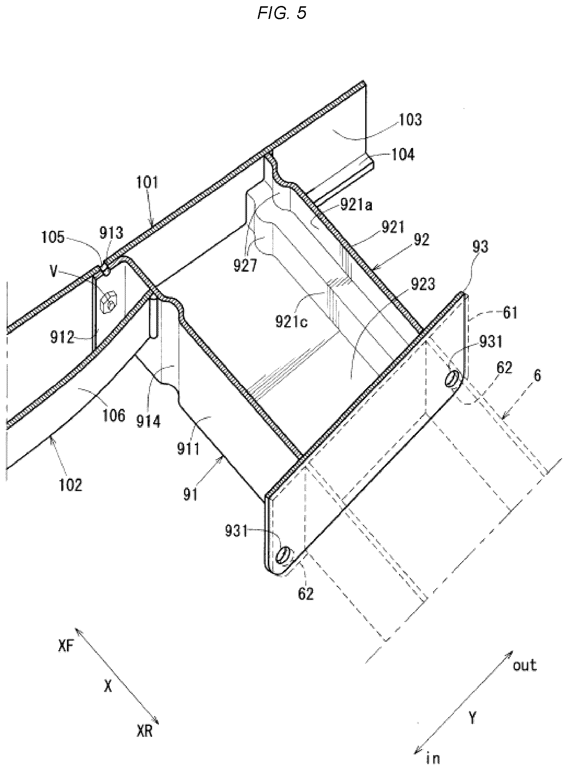

FIG. 1 is a plan view of external appearance of a front structure of a vehicle 1, FIG. 2 is an end view taken along a cross-sectional line A-A in FIG. 1, FIG. 3 is a schematic cross-sectional view taken along an arrow B-B in FIG. 1, FIG. 4 is a schematic cross-sectional view taken along an arrow C-C in FIG. 3, and FIG. 5 is a schematic cross-sectional perspective view of a main section in the front structure of the vehicle 1.

In order to clarify the illustration, in FIG. 1, hinge pillars 3, apron reinforcements 4, a shroud upper member 5, and front wheels 71 are indicated by two-dot chain lines. In addition, in FIG. 5, a bolt V is not illustrated, and a front side frame 6 and a set plate 61 are indicated by two-dot chain lines.

Here, in the drawings, a vehicle front-rear direction of FIG. 1 is defined as a vehicle front-rear direction X, and a vehicle width direction of the vehicle 1 is defined as a vehicle width direction Y. In the drawings, a vehicle front side is defined as a vehicle front side XF, and a vehicle rear side is defined as a vehicle rear side XR. In the drawings, an arrow OUT indicates an outer side in the vehicle width direction, and an arrow IN indicates an inner side in the vehicle width direction.

As illustrated in FIG. 1, the front structure of the vehicle 1 includes: a dash panel 2 forming a front wall of a cabin; the hinge pillars 3 extending in a vehicle up-down direction on outer sides in the vehicle width direction of the dash panel 2; a pair of the left and right apron reinforcements 4 extending to the vehicle front side XF from upper portions of the hinge pillars 3, respectively; and the shroud upper member 5 coupling front ends of the apron reinforcements 4 in the vehicle width direction Y.

Furthermore, the front structure of the vehicle 1 includes: the pair of left and right front side frames 6 extending in the vehicle front-rear direction X at positions with a predetermined distance in the vehicle width direction Y therebetween on vehicle lower sides of the apron reinforcements 4; a pair of left and right suspension towers 7, each of which is disposed across the apron reinforcement 4 to the front side frame 6; and a cross member 8 coupling the left and right front side frames 6 in the vehicle width direction Y.

In addition, the front structure of the vehicle 1 includes: a pair of left and right crash cans 9 extending to the vehicle front side XF from the front side frames 6, respectively; and a bumper reinforcement 10 coupling front end portions of the pair of left and right crash cans 9 in the vehicle width direction Y.

Although not illustrated in detail, the front structure of the vehicle 1 forms an engine room E, in which an engine and the like are disposed, by the dash panel 2, the front side frames 6, the crash cans 9, and the bumper reinforcement 10.

In detail, as illustrated in FIG. 1, the dash panel 2 has a thickness in the vehicle front-rear direction X, and is formed by a panel member that separates the engine room E and the cabin of the vehicle 1 in the vehicle front-rear direction X.

The hinge pillars 3 are body frame members, each of which is formed in a closed cross-sectional shape extending in the vehicle up-down direction, and are joined to both ends in the vehicle width direction Y of the dash panel 2.

The apron reinforcement 4 is formed in a closed cross-sectional shape extending in the vehicle front-rear direction X, and a rear end portion thereof is joined to the upper portion of the respective hinge pillar 3. This apron reinforcement 4 is formed in a gradually curved shape such that a front end thereof is located inward in the vehicle width direction with respect to a rear end.

Here, in a plan view, the front end of the apron reinforcement 4 is formed to be located on the outer side in the vehicle width direction of the respective front side frame 6, which will be described below.

The shroud upper member 5 is a closed cross-sectional member that is formed in a closed cross-sectional shape extending in the vehicle width direction Y, and both end portions on the outer sides in the vehicle width direction thereof are coupled to the front ends of the left and right apron reinforcements 4, respectively.

The front side frame 6 is a body frame member that is formed in a closed cross-sectional shape extending to the vehicle front side XF from a lower portion of the dash panel 2, and is formed in such a length that a front end thereof is located on a vehicle lower side of the shroud upper member 5.

In the plan view, these left and right front side frames 6 are disposed such that a distance in the vehicle width direction Y therebetween is increased from the dash panel 2 toward the vehicle front side XF.

Furthermore, the set plate 61 in a flat plate shape formed in a substantially square shape in a front view is provided in a front end portion of the respective front side frame 6. At four corners of the set plate 61, an insertion hole 62 for inserting the bolt V is formed by penetrating the set plate 61 in a plate thickness direction (see FIG. 5).

The suspension tower 7 is integrally formed by a suspension tower body bulging inward in the vehicle width direction, a panel member disposed on the vehicle front side XF of the suspension tower body, and a panel member disposed on the vehicle rear side XR of the suspension tower body.

This suspension tower 7 couples a portion on the vehicle rear side XR of the respective apron reinforcement 4 and a portion on the vehicle rear side XR of the respective front side frame 6.

Here, the suspension tower 7 supports the respective front wheel 71 via a suspension member (not illustrated).

The cross member 8 is a body frame member that is formed in a closed cross-sectional shape extending in the vehicle width direction Y. In the plan view, this cross member 8 couples the left and right front side frames 6 in the vehicle width direction Y at a position on the vehicle rear side XR of the shroud upper member 5 and a position on the vehicle front side XF of the suspension towers 7.

As illustrated in FIG. 1, in the plan view, each of the left and right crash cans 9 is an impact absorbing member that is formed in a closed cross-sectional shape extending in the vehicle front-rear direction X, and a vertical cross-sectional shape thereof in a vertical cross section along the vehicle width direction Y is formed to have a substantially convex cross section protruding outward in the vehicle width direction.

These left and right crash cans 9 are disposed such that a rear end of each thereof is coupled to the respective set plate 61 of the front side frame 6 and that a distance therebetween in the vehicle width direction Y is increased from the set plates 61 toward the vehicle front side XF in the plan view.

Here, the crash cans 9 are each formed in such a length that a front end thereof abuts the rear surface of an outer bumper reinforcement 101.

As illustrated in FIG. 2, such a crash can 9 is formed by joining, in the vehicle width direction Y, an inner crash can 91 located on the inner side in the vehicle width direction to an outer crash can 92 located on the outer side in the vehicle width direction of the inner crash can 91.

In detail, as illustrated in FIGs. 2 and 4, the inner crash can 91 is integrally formed by a plate-shaped inner body 911, whose vertical cross-sectional shape in the vertical cross section along the vehicle width direction Y has a thickness in the vehicle width direction Y, and a flange-shaped flange portion 912 extending inward in the vehicle width direction from a front end of the inner body 911.

The flange portion 912 of this inner crash can 91 is formed to abut the rear surface of the bumper reinforcement 10 (the outer bumper reinforcement 101 of the bumper reinforcement 10, which will be described below).

Furthermore, the flange portion 912 of the inner crash can 91 is formed with an insertion hole 913, through which the bolt V for fastening and fixing the inner crash can 91 to the bumper reinforcement 10 is inserted. In this flange portion 912, the three insertion holes 913 penetrate the flange portion 912 in a plate thickness direction and are formed at predetermined intervals in the vehicle up-down direction (see FIG. 3).

In addition, as illustrated in FIG. 4, in the inner crash can 91, at a position on the vehicle rear side XR of the bumper reinforcement 10, an inner bead 914 extending in the vehicle up-down direction is formed in the inner body 911.

The inner bead 914 has a concave groove shape that is recessed in a substantially semicircular shape toward the outer side in the vehicle width direction, and is formed from the upper end to the lower end of the inner body 911 (see FIG. 3).

The inner bead 914 is provided to promote deformation of the crash can 9 due to a collision load from the vehicle front side XF.

Meanwhile, as illustrated in FIG. 2, the outer crash can 92 is formed to have a substantially hat-shaped cross section in which a vertical cross-sectional shape in the vertical cross section along the vehicle width direction Y protrudes outward in the vehicle width direction.

This outer crash can 92 is integrally formed by: an outer side wall portion 921 on the outer side in the vehicle width direction that opposes the inner body 911 of the inner crash can 91 with a predetermined distance; a top plate portion 922 extending inward in the vehicle width direction from an upper end of the outer side wall portion 921; and a bottom plate portion 923 extending inward in the vehicle width direction from a lower end of the outer side wall portion 921.

Furthermore, the outer crash can 92 is integrally formed with: an upper flange portion 924 in a flange shape extending upward in the vehicle from an inner end portion in the vehicle width direction of the top plate portion 922; and a lower flange portion 925 in a flange shape extending to the vehicle lower side from an inner end portion in the vehicle width direction of the bottom plate portion 923.

In this outer crash can 92, the upper flange portion 924 and the lower flange portion 925 are joined to a surface on the outer side in the vehicle width direction of the inner body 911 of the inner crash can 91. Here, in the upper flange portion 924 and the lower flange portion 925, positions corresponding to the inner bead 914 of the inner crash can 91 are recessed outward in the vehicle width direction.

In detail, the outer side wall portion 921 is integrally formed by: an outer opposing portion 921a whose vertical cross-sectional shape in the vertical cross section along the vehicle width direction Y is a substantially hat-shaped cross section and that opposes the inner body 911 of the inner crash can 91 in the vehicle width direction Y; an upper extending portion (not denoted by a reference sign) that extends inward in the vehicle width direction from an upper end of the outer opposing portion 921a; and a lower extending portion (not denoted by a reference sign) that extends inward in the vehicle width direction from a lower end of the outer side wall portion 921.

Furthermore, the outer side wall portion 921 is integrally formed with: an inner opposing portion 921b extending to the vehicle upper side from the upper extending portion of the outer side wall portion 921 and opposing the inner body 911 of the crash can 9; and an inner opposing portion 921c extending to the vehicle lower side from the lower extending portion of the outer side wall portion 921 and opposing the inner body 911.

As illustrated in FIG. 4, near a front end of this outer side wall portion 921, an outer bead 926 extending in the vehicle up-down direction is formed in the outer opposing portion 921a and the inner opposing portions 921b, 921c.

The outer bead 926 has a groove shape that is recessed inward in the vehicle width direction in a substantially semicircular shape, and is formed from the upper end to the lower end of the outer opposing portion 921a and the inner opposing portions 921b, 921c (see FIG. 5).

This outer bead 926 is provided to promote the deformation of the crash can 9 by the collision load from the vehicle front side XF.

A rear end of this crash can 9 is attached to the set plate 61 of the front side frame 6 via an attachment plate 93.

As illustrated in FIGs. 4 and 5, the attachment plate 93 is formed in a substantially rectangular flat plate shape in a front view that is substantially in the same shape as the set plate 61.

In addition, at four corners of the attachment plate 93, an insertion hole 931 for inserting the bolt V is formed by penetrating the attachment plate in a plate thickness direction (see FIG. 5). The insertion holes 931 of this attachment plate 93 are disposed at positions communicating with the insertion holes 62 of the set plate 61, respectively.

As illustrated in FIG. 4, in the thus-configured crash can 9, the flange portion 912 of the inner crash can 91 abuts the rear surface of the outer bumper reinforcement 101 and is fastened and fixed thereto by the bolt V.

Furthermore, in the crash can 9, in a state where the front end of the outer crash can 92 abuts the rear surface of the outer bumper reinforcement 101, the outer peripheral edge at the front end of the outer crash can 92 is welded and fixed to the outer bumper reinforcement 101.

In detail, in a state of abutting the outer bumper reinforcement 101, outer peripheral edges at front ends of the outer side wall portion 921, the top plate portion 922, the bottom plate portion 923, the upper flange portion 924, and the lower flange portion 925 in the outer crash can 92 are welded and fixed thereto.

In addition, as illustrated in FIG. 1, in the plan view, the bumper reinforcement 10 is an impact absorbing member in a closed cross-sectional shape extending in the vehicle width direction Y, and is formed in a substantially arcuate shape, a substantial center of which in the vehicle width direction Y protrudes to the vehicle front side XF.

Such a bumper reinforcement 10 is formed by joining the outer bumper reinforcement 101 located on the vehicle front side XF to an inner bumper reinforcement 102 located on the vehicle rear side XR of the outer bumper reinforcement 101 in the vehicle front-rear direction X.

In detail, as illustrated in FIG. 1, the outer bumper reinforcement 101 is a substantially plate-shaped member in such a length in the vehicle width direction Y that protrudes outward in the vehicle width direction from the outer opposing portions 921a of the left and right crash cans 9.

As illustrated in FIG. 3, this outer bumper reinforcement 101 is integrally formed by a plate-shaped outer reinforcement body 103 having a main surface in the vehicle front-rear direction X and a pair of flange-shaped flange portions 104 extending to the vehicle rear side XR from both an upper end and a lower end of the outer reinforcement body 103.

Furthermore, the outer reinforcement body 103 is formed with insertion holes 105, through each of which the bolt V for fastening and fixing the crash can 9 is inserted, at positions opposing the three insertion holes 913 provided in the flange portion 912 of the crash can 9, respectively.

Meanwhile, as illustrated in FIG. 3, the inner bumper reinforcement 102 is disposed between the left and right crash cans 9 in the vehicle width direction Y, and a vertical cross-sectional shape thereof in the vertical cross section along the vehicle front-rear direction X is formed as a hat-shaped cross section protruding to the vehicle rear side XR.

Furthermore, the inner bumper reinforcement 102 is formed to have such a length in the vehicle width direction Y that end portions thereof on the outer side in the vehicle width direction abut end surfaces on the inner side in the vehicle width direction of the left and right crash cans 9.

More specifically, in the vertical cross section along the vehicle front-rear direction X, the inner bumper reinforcement 102 is integrally formed by: a rear wall portion 106 located on the vehicle rear side XR with a predetermined distance from the outer reinforcement body 103 and opposing it; a top plate portion 107 extending to the vehicle front side XF from an upper end of the rear wall portion 106; and a bottom plate portion 108 extending to the vehicle front side XF from a lower end of the rear wall portion 106.

Furthermore, the inner bumper reinforcement 102 is integrally formed with: an upper flange portion 109 extending upward from a portion at a center in the vehicle width direction Y and a front end of the top plate portion 107; and a lower flange portion 110 extending downward from a portion at a center in the vehicle width direction Y and a front end of the bottom plate portion 108.

Here, in the inner bumper reinforcement 102, the upper flange portion 109 and the lower flange portion 110 are joined to the vehicle rear side XR of the outer reinforcement body 103 of the outer bumper reinforcement 101.

In addition, the inner bumper reinforcement 102 is configured that the upper flange portion 109 and the lower flange portion 110 of the inner bumper reinforcement 102 do not overlap the flange portion 912 of the inner crash can 91 in the vehicle front-rear direction X when the crash can 9 and the bumper reinforcement 10 are joined to each other (see FIG. 3).

Further in detail, as illustrated in FIG. 3, the rear wall portion 106 is formed in a plate shape that has a thickness in the vehicle front-rear direction X and has a sufficient length in the vehicle width direction Y to abut inner surfaces in the vehicle width direction of the inner bodies 911 of the left and right crash cans 9.

In addition, each of the top plate portion 107 and the bottom plate portion 108 is formed in a plate shape having a sufficient length in the vehicle width direction Y to abut the inner surfaces in the vehicle width direction of the inner bodies 911 of the left and right crash cans 9.

The upper flange portion 109 has a length in the vehicle width direction Y that is shorter than that of the top plate portion 107, and is formed such that outer end portions thereof in the vehicle width direction are located at positions on the inner side in the vehicle width direction away from the inner surfaces in the vehicle width direction of the inner bodies 911 of the left and right crash cans 9.

The lower flange portion 110 has a length in the vehicle width direction Y that is shorter than that of the bottom plate portion 108, and is formed such that outer end portions thereof in the vehicle width direction are located at positions on the inner side in the vehicle width direction away from the inner surfaces in the vehicle width direction of the inner bodies 911 of the left and right crash cans 9.

As illustrated in FIG. 4, the thus-configured bumper reinforcement 10 is joined in a state where the rear surface of the outer bumper reinforcement 101 abuts the front ends of the crash cans 9.

Furthermore, the bumper reinforcement 10 is joined in a state where both outer ends in the vehicle width direction of the inner bumper reinforcement 102 abut the inner bodies 911 of the crash cans 9 (See FIG. 4).

In detail, the outer bumper reinforcement 101 of the bumper reinforcement 10 is fastened and joined in the state where the flange portion 912 of the inner crash can 91 of the crash can 9 abuts the rear surface of the outer reinforcement body 103.

Here, in an abutment state of the flange portion 912 of the inner crash can 91, the outer reinforcement body 103 is fastened and joined thereto by the bolt V.

Furthermore, the outer bumper reinforcement 101 is welded and fixed in a state where the front end of the outer crash can 92, more specifically, front ends of the outer side wall portion 921, the top plate portion 922, the bottom plate portion 923, the upper flange portion 924, and the lower flange portion 925 abut the rear surface of the outer reinforcement body 103.

To the outer reinforcement body 103, outer peripheral edges at the front ends of the outer side wall portion 921, the top plate portion 922, the bottom plate portion 923, the upper flange portion 924, and the lower flange portion 925 are fixed by welding.

Meanwhile, as illustrated in FIGs. 4 and 5, in a state where outer end portions in the vehicle width direction of the rear wall portion 106, the top plate portion 107, and the bottom plate portion 108 abut the inner crash can 91 of the crash can 9, the inner bumper reinforcement 102 of the bumper reinforcement 10 is fixed thereto by welding.

Outer peripheral edges of the outer end portions in the vehicle width direction of the rear wall portion 106, the top plate portion 107, and the bottom plate portion 108 are fixed to the inner crash can 91 of the crash can 9 by welding.

Just as described, in the front structure of the vehicle 1, in regard to the crash can 9 and the bumper reinforcement 10, coupling strength of each of the left and right crash cans 9 is improved by fixing the front end of the crash can 9 to the rear surface of the bumper reinforcement 10 and fixing the outer end portion in the vehicle width direction of the inner bumper reinforcement 102 to the inner crash can 91.

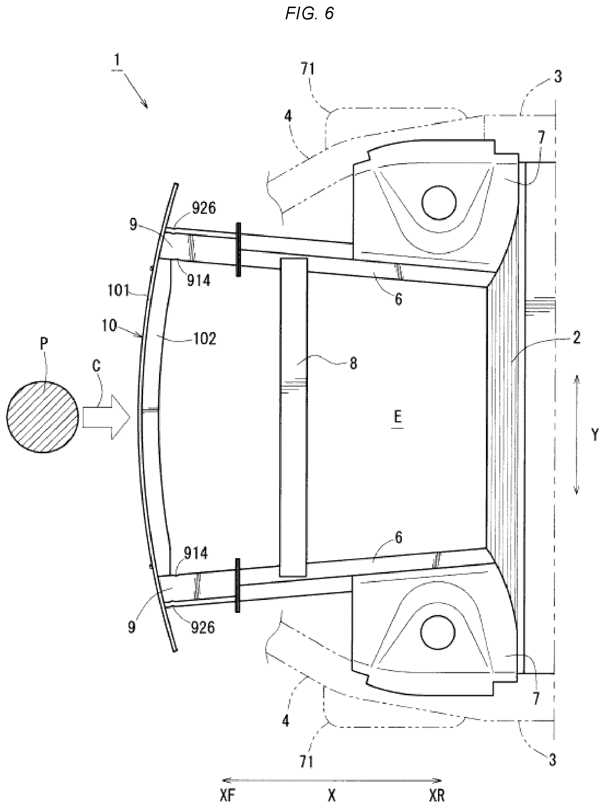

A description will be made on a state of the front portion of the vehicle 1 in the front structure of the vehicle 1 at the time when a pole P as a narrower collision object than the distance in the vehicle width direction between the left and right crash cans 9 collides between the left and right crash cans 9 in the vehicle front portion with reference to FIG. 6 to FIG. 8.

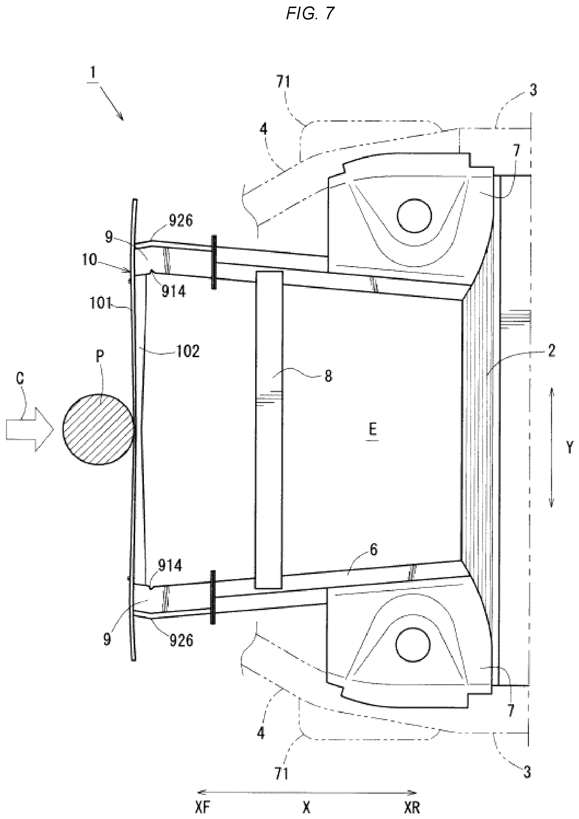

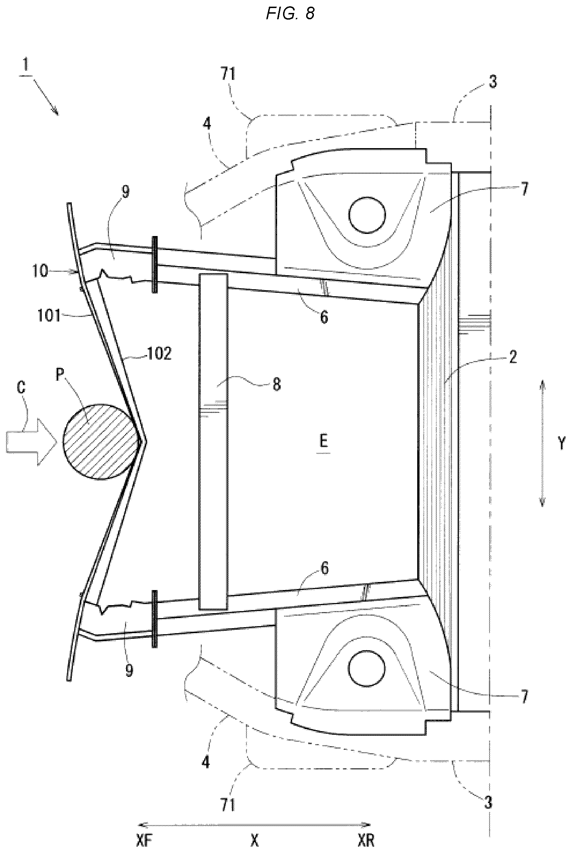

Here, FIG. 6 is a plan view of the state of the vehicle 1 immediately before colliding with the pole P, FIG. 7 is a plan view of the state of the vehicle 1 immediately after the collision, and FIG. 8 is a plan view of the state of the vehicle 1 whose collision has progressed.

In addition, in order to clarify illustration, a front end portion of the apron reinforcement 4 and the shroud upper member 5 illustrated in FIG. 1 are not illustrated in FIG. 6 to FIG. 8.

First, as indicated by an arrow C in FIG. 6, it is assumed that the columnar pole P, such as a utility pole, as the narrower collision object than the distance in the vehicle width direction Y between the left and right crash cans 9 collides between the left and right crash cans 9 in the vehicle front portion, more specifically, with the substantial center in the vehicle width direction Y of the bumper reinforcement 10 from the vehicle front side XF toward the vehicle rear side XR.

At this time, as illustrated in FIG. 7, the bumper reinforcement 10 is pressed to the vehicle rear side XR by the pole P that has collided from the vehicle front side XF. As a result, the bumper reinforcement 10, which protrudes in the substantially arcuate shape to the vehicle front side XF, is deformed such that the substantially arcuate shape thereof in the plan view becomes a substantially straight flat plate shape extending in the vehicle width direction Y.

In detail, the bumper reinforcement 10 having the closed cross-sectional shape extending in the vehicle width direction Y is deformed toward the vehicle rear side XR such that the outer bumper reinforcement 101 approaches the inner bumper reinforcement 102 and crushes a closed cross-sectional space to the vehicle rear side XR.

Thereafter, when the collision of the pole P further progresses, as illustrated in FIG. 8, the bumper reinforcement 10 is bent and deformed such that the substantial center thereof in the vehicle width direction Y protrudes to the vehicle rear side XR from the front ends of the crash cans 9.

In the plan view, each of the crash cans 9 is deformed to the vehicle rear side XR while being bent at the inner bead 914 in a manner to be tilted inward in the vehicle width direction.

At this time, due to bending and deformation of the bumper reinforcement 10, a tensile load, which is increased with progress in the collision, is generated in a joint portion between the bumper reinforcement 10 and each of the left and right crash cans 9.

In regard to such a tensile load, the front structure of the vehicle 1 suppresses a rupture of the joint portion between each of the crash cans 9 and the bumper reinforcement 10 caused by the above-described tensile load by joining outer end portions in the vehicle width direction of the inner bumper reinforcement 102, which is disposed between the left and right crash cans 9 in the vehicle width direction Y, to the inner crash cans 91 of the left and right crash cans 9 to improve the coupling strength between the crash cans 9 and the bumper reinforcement 10.

As it has been described so far, the front structure of the vehicle 1 includes: the pair of left and right crash cans 9 extending in the vehicle front-rear direction X with the predetermined distance interposed therebetween in the vehicle width direction Y of the vehicle 1; and the outer bumper reinforcement 101 coupling the front ends of the left and right crash cans 9 in the vehicle width direction Y.

Furthermore, the front structure of the vehicle 1 includes the inner bumper reinforcement 102 disposed between the crash cans 9 and extending along the vehicle width direction Y.

In addition, in the front structure of the vehicle 1, in regard to the crash can 9 and the outer bumper reinforcement 101, the flange portion 912 of the crash can 9 is joined to the rear surface of the outer bumper reinforcement 101.

In the front structure of the vehicle 1, each end in the vehicle width direction Y of the inner bumper reinforcement 102 is joined to the portion located on the vehicle rear side XR of the joint portion between the crash can 9 and the outer bumper reinforcement 101 and near the front end of the crash can 9.

According to this configuration, it is possible to suppress the rupture of the joint portion between the crash can 9 and the outer bumper reinforcement 101 when the pole P having the distance in the vehicle width direction Y between the left and right crash cans 9 collides between the left and right crash cans 9 in the vehicle front portion.

In detail, in the front structure of the vehicle 1, the left and right crash cans 9 can be coupled to each other by the inner bumper reinforcement 102 by joining the inner bumper reinforcement 102 to the position that is located on the vehicle rear side XR of the joint portion between each of the left and right crash cans 9 and the outer bumper reinforcement 101 and near the front end of the respective crash can 9.

Thus, compared to a case where the crash cans 9 are coupled only to the outer bumper reinforcement 101, the front structure of the vehicle 1 can improve the coupling strength of the left and right crash cans 9 against the collision load from the vehicle front side XF.

Furthermore, in the front structure of the vehicle 1, when the pole P collides with the vehicle front portion, the outer bumper reinforcement 101 and the inner bumper reinforcement 102, each of which couples the left and right crash cans 9, can be deformed integrally. Thus, it is possible to suppress the tensile load generated in the joint portion between the flange portion 912 of the crash can 9 and the outer bumper reinforcement 101.

In this way, it is possible to suppress the rupture of the joint portion between the crash can 9 and the outer bumper reinforcement 101 when the pole P having the distance in the vehicle width direction Y between the left and right crash cans 9 collides between the left and right crash cans 9 in the vehicle front portion.

Accordingly, the front structure of the vehicle 1 can prevent detachment of the outer bumper reinforcement 101 from the crash can 9 at an early stage or a reduction in load transmission efficiency for transmitting the collision load to the vehicle rear side XR, for example.

In the state of abutting the rear surface of the outer bumper reinforcement 101, each of the crash cans 9 is fixed thereto. Furthermore, in the state of abutting the inner side in the vehicle width direction of each of the crash cans 9, the inner bumper reinforcement 102 is fixed thereto.

According to this configuration, since each of the crash cans 9 and the outer bumper reinforcement 101 can be fixed along the vehicle front-rear direction X, it is possible to improve the coupling strength of the crash cans 9 against the tensile load in the vehicle front-rear direction X.

Furthermore, in the front structure of the vehicle 1, since each of the crash cans 9 and the inner bumper reinforcement 102 can be fixed along the vehicle width direction Y, it is possible to improve the coupling strength of the crash cans 9 against the tensile load in the vehicle width direction Y.

In this way, in the front structure of the vehicle 1, the coupling strength of the left and right crash cans 9 against the collision load from the vehicle front side XF can be improved. Thus, it is possible to suppress the rupture of the joint portion between each of the crash cans 9 and the outer bumper reinforcement 101 caused by the collision with the pole P.

In addition, each of the crash cans 9 is formed in the closed cross-sectional shape having the inner body 911 and the outer side wall portion 921 opposing each other in the vehicle width direction Y, and is provided with the flange portion 912 extending inward in the vehicle width direction from the front end of the inner body 911.

Furthermore, the flange portion 912 of the inner body 911 is fastened and fixed to the outer bumper reinforcement 101.

Moreover, the inner bumper reinforcement 102 is fixed to the inner body 911 of the crash can 9 by welding.

According to this configuration, the flange portion 912 of the crash can 9 and the outer bumper reinforcement 101 can firmly be fixed to each other by fastening, and the crash can 9 and the inner bumper reinforcement 102 can firmly be fixed to each other by welding.

In this way, the front structure of the vehicle 1 can further improve the coupling strength of the left and right crash cans 9 against the collision load from the vehicle front side XF.

The front structure of the vehicle 1 includes the bumper reinforcement 10 that couples the crash cans 9 in the vehicle width direction Y, and the outer bumper reinforcement 101 couples the front ends of the crash cans 9 in the vehicle width direction Y.

Furthermore, the inner bumper reinforcement 102 is joined to the rear surface of the outer bumper reinforcement 101, and forms the closed cross section extending in the vehicle width direction Y with the outer bumper reinforcement 101.

According to this configuration, it is possible to improve the coupling strength of the left and right crash cans 9 without providing a separate member from the bumper reinforcement 10.

Therefore, the front structure of the vehicle 1 can suppress the rupture of the joint portion between each of the crash cans 9 and the outer bumper reinforcement 101 with a simple structure.

Each of the crash cans 9 is formed in the closed cross-sectional shape having the inner body 911 and the outer side wall portion 921 opposing each other in the vehicle width direction Y.

Furthermore, at the position on the vehicle rear side XR of the inner bumper reinforcement 102, the inner body 911 and the outer side wall portion 921 extend in the vehicle up-down direction, and are provided with the inner bead 914 and the outer bead 926 promoting the deformation of the crash can 9 by the collision load from the vehicle front side XF.

According to this configuration, when the pole P having the distance in the vehicle width direction Y between the left and right crash cans 9 collides between the left and right crash cans 9 in the vehicle front portion, each of the crash cans 9 can be deformed toward the narrow collision object in conjunction with the deformation of the outer bumper reinforcement 101 and the inner bumper reinforcement 102.

Therefore, when the pole P collides between the crash cans 9 in the vehicle front portion, the front structure of the vehicle 1 can transmit the collision load from the vehicle front side XF to the vehicle rear side XR while absorbing it by the deformation of the crash cans 9.

In addition, the left and right crash cans 9 are disposed such that the distance therebetween in the vehicle width direction Y is increased toward the vehicle front side XF from the vehicle rear side XR.

Then, the outer bumper reinforcement 101 extends outward in the vehicle width direction Y in comparison with the outer end portions in the vehicle width direction Y of the crash cans 9.

According to this configuration, for example, the collision object, which moves from the vehicle front side XF toward the vehicle rear side XR through the outer side in the vehicle width direction Y of the crash cans 9, can be brought into contact with the outer bumper reinforcement 101.

At this time, in the front structure of the vehicle 1, the inner bumper reinforcement 102 can suppress the deformation of each of the crash cans 9 in the manner to be tilted outward in the vehicle width direction Y and toward the vehicle rear side XR in the plan view.

In this way, the front structure of the vehicle 1 can suppress the collision object from the vehicle front side XF from moving to the vehicle rear side XR through the outer side in the vehicle width direction Y of the crash cans 9.

Therefore, the front structure of the vehicle 1 can cope with not only the collision object of the pole P between the crash cans 9 but also a collision of the collision object to the outer side in the vehicle width direction Y.

In correspondence between the configuration in the invention and the above-described embodiment, the coupling member in the invention corresponds to the outer bumper reinforcement 101 in the embodiment. Similarly, hereinafter, the width direction member corresponds to the inner bumper reinforcement 102, the fixed portion corresponds to the flange portion 912, the side wall portion corresponds to the inner body 911 and the outer side wall portion 921, and the bead corresponds to the inner bead 914 and the outer bead 926. However, the invention is not limited to the configuration in the above-described embodiment, and many embodiments can be obtained.

For example, in the above-described embodiment, the front structure of the vehicle 1 is configured to provide the cross member 8 formed in the closed cross-sectional shape extending in the vehicle width direction Y. However, the front structure of the vehicle 1 is not limited thereto and may be configured not to include the cross member 8.

The left and right crash cans 9 are disposed such that the distance in the vehicle width direction Y therebetween is increased toward the vehicle front side XF from the set plate 61 in the plan view. However, the invention is not limited thereto. For example, the left and right crash cans 9 may be disposed such that the distance in the vehicle width direction Y between the left and right crash cans 9 is substantially the same at the rear end and the front end.

Furthermore, each of the crash cans 9 is formed to have the substantially convex cross section in which the vertical cross-sectional shape in the vertical cross section along the vehicle width direction Y protrudes outward in the vehicle width direction. However, the invention is not limited thereto, and each of the crash cans 9 may have an appropriate cross-sectional shape.

It is configured that the front end of the outer crash can 92 in each of the crash cans 9 directly abuts the rear surface of the outer bumper reinforcement 101. However, the invention is not limited thereto, and it may be configured that a flange is formed at the front end of the outer crash can 92 and the outer crash can 92 abuts the outer bumper reinforcement 101 via the flange.

In this case, the outer crash can 92 of the crash can 9 may be configured that the outer peripheral edge of the flange is fixed to the outer bumper reinforcement 101 of the bumper reinforcement 10 by welding, or may be configured that the flange and the outer bumper reinforcement 101 are fixed to each other by fastening.

The crash can 9 is configured to include the inner bead 914 and the outer bead 926, each of which has the concave groove shape recessed in the substantially semicircular shape. However, the crash can 9 is not limited thereto and may be configured not to include the bead.

The bumper reinforcement 10 is formed by the outer bumper reinforcement 101 and the inner bumper reinforcement 102, and the inner bumper reinforcement 102 is joined to the inner body 911 of the crash can 9. However, the invention is not limited thereto.

For example, the width direction member that is the separate body from the bumper reinforcement 10 and is disposed between the crash cans 9 may be joined to the crash can 9.

In this case, the inner bumper reinforcement 102 may not be joined to the inner body 911 of the crash can 9.

The inner bumper reinforcement 102 is configured that the end portions on the outer side in the vehicle width direction of the rear wall portion 106, the top plate portion 107, and the bottom plate portion 108 directly abut the inner surface in the vehicle width direction of the inner body 911 of the crash can 9. However, the invention is not limited thereto.

For example, it may be configured to form a flange on the outer side in the vehicle width direction of each of the rear wall portion 106, the top plate portion 107, and the bottom plate portion 108 and cause each of the rear wall portion 106, the top plate portion 107, and the bottom plate portion 108 to abut the outer surface in the vehicle width direction of the inner body 911 via the flange.

In this case, the inner bumper reinforcement 102 may be configured that the outer peripheral edge of the flange is fixed to the inner body 911 of the crash can 9 by welding, or may be configured that the flange and the inner body 911 are fixed to each other by fastening.

The description has been made by using the columnar pole P, such as the utility pole, as the collision object. However, the collision object is not limited thereto, and the collision object may have an appropriate cross-sectional shape as long as it is narrower than the distance in the vehicle width direction Y between the crash cans 9.

The pole P collides with the substantial center in the vehicle width direction Y of the bumper reinforcement 10. However, the invention is not limited thereto. the pole P may collide with any position in the vehicle width direction Y as long as the position being located between the crash cans 9 in the vehicle front portion.

Even in this case, the same effect as that in the above-described embodiment can be exerted.

### Reference Signs List

1 vehicle
9 crash can
10 bumper reinforcement
101 outer bumper reinforcement
102 inner bumper reinforcement
912 flange portion
914 inner bead
921 outer side wall portion
926 outer bead
X vehicle front-rear direction
Y vehicle width direction

## Claims

1. A vehicle front structure including:
a pair of left and right crash cans (9) extending in a vehicle front-rear direction (X) with a predetermined distance being interposed therebetween in a vehicle width direction (Y) of a vehicle; and
a coupling member (outer bumper reinforcement 101) coupling front ends of the left and right crash cans (9) in the vehicle width direction (Y), the vehicle front structure comprising:
a width direction member (inner bumper reinforcement 102) disposed between the crash cans (9) and extending along the vehicle width direction (Y), wherein
in regard to the crash cans (9) and the coupling member (101), a front end on an inner side in the vehicle width direction (Y) of each of the crash cans (9) is joined to a rear surface of the coupling member (101), and
each of both ends in the vehicle width direction (Y) of the width direction member (102) is joined to a position located on a vehicle rear side (XR) of a joint portion between each of the crash cans (9) and the coupling member (101) and near the front end of each of the crash cans (9).

2. The vehicle front structure according to claim 1, wherein
in a state of abutting the rear surface of the coupling member (101), each of the crash cans (9) is fixed thereto, and
in a state of abutting the inner side in the vehicle width direction (Y) of each of the crash cans (9), the width direction member (102) is fixed thereto.

3. The vehicle front structure according to claim 2, wherein
each of the crash cans (9) is provided with a fixed portion (flange portion 912) that is formed in a closed cross-sectional shape having a side wall portion (inner body 911) opposing in the vehicle width direction (Y) and extends inward in the vehicle width direction (Y) from a front end of the side wall portion (911) on the inner side in the vehicle width direction,
the fixed portion (912) is fixed to the coupling member (101) by fastening, and
the width direction member (102) is fixed to the side wall portion (911) on the inner side in the vehicle width direction of each of the crash cans (9) by welding.

4. The vehicle front structure according to claim 1, further comprising:
a bumper reinforcement (10) that couples the crash cans (9) in the vehicle width direction (Y), wherein
the coupling member is formed by an outer bumper reinforcement (101) of the bumper reinforcement (10) that couples the front ends of the crash cans (9) in the vehicle width direction (Y), and
the width direction member is joined to a rear surface of the outer bumper reinforcement (101), has a closed cross section extending in the vehicle width direction (Y) with the outer bumper reinforcement (101), and is formed by an inner bumper reinforcement (102) of the bumper reinforcement (10).

5. The vehicle front structure according to claim 1, wherein
each of the crash cans (9) is formed in a closed cross-sectional shape that has a side wall portion (911, 921) opposing in the vehicle width direction (Y), and
the lateral wall portion (921) is provided with a bead (914, 926) at a position behind the width direction member (102) in the vehicle, the bead extending in a vehicle up-down direction and promoting deformation of the crash cans (9) by a collision load from a vehicle front side (XF).

6. The vehicle front structure according to claim 1, wherein
the left and right crash cans (9) are disposed such that the distance in the vehicle width direction (Y) is increased to front in the vehicle from rear ends, and
the coupling member (101) extends outward in the vehicle width direction (Y) in comparison with outer end portions in the vehicle width direction of the crash cans (9).

7. The vehicle front structure according to any of the preceding claims,
wherein the inner bumper reinforcement (102) is configured such that its outer ends in the vehicle width direction (Y) abut and are welded to the inner crash cans (91) at positions offset inward from the front ends of the crash cans.

8. The vehicle front structure according to any of the preceding claims,
wherein the inner bumper reinforcement (102) comprises a rear wall portion (106), a top plate portion (107), and a bottom plate portion (108), each having a length sufficient to abut the inner surfaces of the inner bodies (911) of the crash cans (9) and is integrally formed with flange portions (109, 110) for connection to the outer bumper reinforcement (101).

9. The vehicle front structure according to any of the preceding claims,
wherein the flange portion (912) of the inner crash can (91) includes a plurality of bolt holes (913) arranged in the vehicle vertical direction, through which bolts (V) are inserted to fasten the crash can (9) to the outer bumper reinforcement (101).

10. The vehicle front structure according to any of the preceding claims,
wherein the crash cans (9) are formed by joining an inner crash can (91) and an outer crash can (92), the latter having upper and lower flange portions (924, 925) that are welded to the outer surface of the inner body (911) of the inner crash can (91).
